# EUROPÄISCHE PATENTSCHRIFT

(11) **EP 0 915 069 B1**
(45) Veröffentlichungstag und Bekanntmachung des Hinweises auf die Patenterteilung: **13.03.2002**
(21) Anmeldenummer: 98119836.9
(22) Anmeldetag: 20.10.1998
(51) Int. Cl.: C04B 35/66, C04B 28/06, C04B 18/16

(54) **Feuerfestauskleidung**
Refractory lining
Revêtement réfractaire

(30) Priorität: 31.10.1997 DE 19748220; 21.02.1998 DE 19807424; 21.02.1998 DE 29811632 U
(43) Veröffentlichungstag der Anmeldung: 12.05.1999
(73) Patentinhaber: Plibrico G.m.b.H., 40210 Düsseldorf (DE)
(72) Erfinder: Langner, Günter, 45481 Mülheim (DE); Stilger, Frank, 42699 Solingen (DE)
(74) Vertreter: Patentanwälte Lippert, Stachow, Schmidt & Partner

(56) Entgegenhaltungen:
- DD-A- 267 484
- GB-A- 2 282 091

## Beschreibung

Die Erfindung betrifft feuerfeste Wand-, Decken- und Bodenauskleidung für metallurgische Gefäße, wie Behandlungs- und Transportaggregate, Hochofenrinnen, VOD-Deckel, Elektro-Lichtbogenofen-Herzstücke und dergleichen.

Darüber hinaus betrifft die Erfindung ein Verfahren zur Herstellung einer derartigen feuerfesten Auskleidung.

Für hochwertige Feuerfestauskleidungen von metallurgischen Gefäßen, Schmelzaggregaten und dergleichen werden MgO/C-haltige feuerfeste Steine verwendet.

Diese Steine werden aus dem Grundmaterial durch Pressen mit hohen Drücken hergestellt. Ihre Porosität ist vergleichsweise gering und liegt im allgemeinen ≥ 4 % (gleich - größer 4 %). Die MgO/C-haltigen Steine sind einsetzbar bis 1.750 °C und weisen hohe chemische, mechanische und thermische Verschleißbeständigkeit auf. Diese MgO/C-Steine besitzen in der Regel eine Pech- oder Harzbindung und sind getempert oder vakuumimprägniert.

Vor einer erforderlichen Neuzustellung von entsprechend feuerfest ausgekleideten Aggregaten werden die MgO/C-Steine mechanisch ausgebrochen und nach dem Stand der Technik entsorgt.

Ein Nachteil der beschriebenen MgO/C-haltigen Feuerfestauskleidung ist ihr relativ hoher Preis.

Neben den hochwertigen MgO/C-haltigen Feuerfestauskleidungen werden bei den Feuerfestverbrauchern im großen Umfange Feuerfestbetone verwendet, die beispielsweise auf der Basis Korund, Spinell, Bauxit, Andalusit oder anderen hochtonerdehaltigen Qualitäten hergestellt werden.

Ihre maximalen Anwendungstemperaturen liegen zwischen 1.600 und 1.800 °C. Sie können je nach Zusammensetzung als Vibrierbetone oder Selbstfließbetone hinter eine Schalung gepumpt werden.

Aus der GB 2 282 091 A ist die Herstellung eines Trennmaterials zum Schutz von Feuerfestauskleidungen metallurgischer Gefäße bekannt. Das pastöse und nass spritzbare Trennmittel besteht aus einer Mischung von MgO/C-haltigem Bruchmaterial mit Bentoniten und Zement. Das Magnesit/Kohlenstoff-Bruchmaterial wird vor der Herstellung der Mischung mit Bentonit und Zement pulverförmig aufgemahlen und mit Wasser zu einer nass spritzbaren Masse angerührt. Die Herstellung eines Trennmittels, welches nur zeitweise in dem metallurgischen Gefäß verbleibt ist jedoch nicht vergleichbar mit der Bereitstellung einer Feuerfestauskleidung.

Auch aus der DD 267 484 A ist ein Schutzüberzug für thermisch hochbelastete Bauteile bekannt, welcher vergleichbar mit dem in der GB 2 282 091 A beschriebenen Trennmittel ist.

Der Erfindung liegt die Aufgabe zugrunde, eine Feuerfestauskleidung auf der Basis eines Feuerfestbetons zu schaffen, dessen chemische, mechanische und thermische Verschleißfestigkeit bei niedrigen Zustellkosten verbessert ist.

Die Aufgabe wird gelöst durch die Merkmale des Anspruchs 1.

Unter Bruchmaterial im Sinne der Erfindung wird im wesentlichen Ausbruchmaterial aus feuerfesten Aggregaten verstanden, das z. B. nach dem Ende einer Ofen- oder Pfannenreise ausgebrochen wird. Dieses Material weist nach dem Ausbruch aufgrund der materialspezifischen Eigenschaften praktisch keine Infiltration mit Schlacke auf und hat, da es durch die Feuerfestanwendung bereits gebrannt ist, nur noch eine reversible Wärmedehnung. Andererseits kann auch Bruchmaterial eingesetzt werden, das bei der Produktion von MgO/C-haltigen Steinen anfällt, oder Bruchmaterial, welches speziell für diesen Zweck aus nicht eingesetzten Steinen hergestellt wird.

Bei der bevorzugten Verwendung von Ausbruchmaterial wird dieses, ggfs. durch einen zusätzlichen Bearbeitungsschritt, zu etwa faustgroßen Stücken ungleichmäßig bzw. splittrig gebrochen, so dass es sich optimal in der Feuerfestmatrix des Betons verankert. Glatte, graphierte Oberflächen des Ausbruchsmaterials sollten vermieden werden.

Durch die Einbettung des Bruchmaterials in die Feuerfestmatrix entsteht ein Feuerbeton, der durch die hohe Feuerfestigkeit, geringe Benetzbarkeit, ausgezeichnete Schlackenresistenz und die gute Temperaturwechselbeständigkeit des Bruchmaterials hinsichtlich seiner Qualität wesentlich verbessert wird, wobei im Falle von Ausbruchmaterial nicht nur die Entsorgungskosten für die MgO/C-haltigen Steine entfallen, sondern auch ein erheblicher Anteil an Feuerfestbeton eingespart werden kann.

Mit der erfindungsgemäßen Feuerfestauskleidung können z. B. hoch- und höchstbeanspruchte Bereiche von Hochofenrinnen, speziell Abstichrinnen, Vakuumbehandlungsdeckel, Elektro-Lichtbogenofendeckel-Herzstücke und dergleichen ausgekleidet werden. Zur Herstellung der Feuerfestauskleidung können die üblichen Techniken angewendet werden. Beispielsweise kann das MgO/C-haltige Bruch- bzw. Ausbruchmaterial hinter eine Schalung verbracht und mit selbstfließendem Feuerbeton aufgefüllt werden. Darüber hinaus ist es möglich, den Ausbruch vor der Verwendung in einen Mischer zusammen mit Feuerbeton einzubringen oder beide Stoffe getrennt auf Bändern oder anderen Fördermitteln an Ort und Stelle zusammenzuführen.

## Patentansprüche

1. Feuerfeste Wand-, Decken- und Bodenauskleidung für metallurgische Gefäße, wie Behandlungs- und Transportaggregate, Hochofenrinnen, VOD-Deckel, Elektro-Lichtbogenofen-Herzstücke und dergleichen, **dadurch gekennzeichnet, dass** in der Matrix des abgebundenen feuerfesten Betons MgO/C-haltiges Bruchmaterial mit einem Durchmesser zwischen 50 und 100 mm eingebettet ist.

2. Verfahren zur Herstellung einer feuerfesten Wand- oder Deckenauskleidung gemäß Anspruch 1, **dadurch gekennzeichnet, dass** in den angemachten Feuerfestbeton MgO/C-haltiges Bruchmaterial mit einem Durchmesser zwischen 50 und 100 mm gemischt wird.

## Claims

1. Refractory linings for metallurgic vessels, such as treatment and transport units, blast furnace runners, VOD covers, EAF delta sections and similar applications, **distinguished by** the fact that wreckage material containing MgO/C and of a diameter of between 50 and 100 mm is cemented and embedded into the matrix of the refractory concrete.

2. The process for the manufacture of such linings as described in Claim 1, **distinguished by** the fact that wreckage material containing MgO/C and of a diameter of between 50 and 100 mm is combined with the mixed refractory concrete.

## Revendications

1. Objet : Garnissages réfractaires de parois, voûtes et fonds de récipients métallurgiques, tels que équipements de traitement ou de transport, rigoles de hauts fourneaux, couvercle VOD, coeurs de voûte de four électrique, et autres semblables. Caractéristiques du garnissage : la granulométrie du matériau MgO/C broyé, et encastré dans la matrice du béton réfractaire, doit se situer entre 50 et 100 mm.

2. Objet : Procédé de production d'un garnissage réfractaire pour parois et voûtes selon caractéristiques de l'objet n°1.
Caractéristiques du procédé : la granulométrie du matériau MgO/C broyé, et mélangé lors du traitement du béton réfractaire, doit se situer entre 50 et 100 mm.
